# EUROPEAN PATENT SPECIFICATION

(11) **EP 2 600 720 B1**
(45) Date of publication and mention of the grant of the patent: **26.11.2014**
(21) Application number: 11745865.3
(22) Date of filing: 01.08.2011
(51) Int. Cl.: A01N 57/16, A01N 47/34

(54) **PESTICIDAL TREATMENT COMPOSITIONS**
VERBINDUNGEN FÜR PESTIZIDE BEHANDLUNGEN
COMPOSITIONS POUR DES TRAITEMENTS PESTICIDES

(30) Priority: 05.08.2010 US 370973 P
(43) Date of publication of application: 12.06.2013
(73) Proprietor: Gowan Comercio Internacional E Servicos Limitada, Funchal, Madeira (PT)
(72) Inventor: CHEUNG, Tak, Wai, Yuma AZ 85364 (US); MELCHIOR, Gary, Louis, Walla Walla WA 99362 (US); MCEWEN, Eric, James, Westwood Hill KS 66205 (US); SELMECZI, Dr. Joszef, H-8900 Zalaegerszeg (HU); ANSIAUX, Jacques-Laurent, 1090 Jette Bruxelles (BE)
(74) Representative: Delaney, Jennifer
(86) International application number: PCT/US2011/046070
(87) International publication number: WO 2012/018702

(56) References cited:
- EP-A2- 0 070 078
- WO-A1-01/28327
- WO-A2-2007/093308
- ERIC J. HOFFMANN ET AL: "Curative Activity of Insecticides Against Plum Curculio (Coleoptera: Curculionidae) in Tart Cherries", JOURNAL OF ECONOMIC ENTOMOLOGY, vol. 102, no. 5, 1 October 2009 (2009-10-01), pages 1864-1873, XP55008136, ISSN: 0022-0493, DOI: 10.1603/029.102.0517

## Description

The present invention relates to pesticidal compositions comprising mixtures of O, O-dimethyl S-phthalimidomethyl phosphorodithioate or suitable salt forms thereof, and at least one benzoylurea based chitin inhibiting compound and especially preferably one or more of (RS)-1-[3-chloro-4-(1,1,2-trifluoro-2-trifluoromethoxyethoxy)phenyl]-3-(2,6-difluorobenzoyl)urea (also interchangeably referred to as "novaluron") or suitable salt forms thereof, and 1-(2-chlorobenzoyl)-3-(4-trifluoromethoxyphenyl)urea (also interchangeably referred to as "triflumuron") or suitable salt forms thereof, for the control of undesired pests, preferably for the control of Codling moths in fruit. In a further aspect the present invention relates to methods for controlling the presence of undesired pests in fruit, and fruit bearing trees which method comprises the step of applying a pest controlling effective amount of O, O-dimethyl S-phthalimidomethyl phosphorodithioate or suitable salt forms thereof, and/or at least one benzoylurea based chitin inhibiting compound and especially preferably one or more of (RS)-1-[3-chloro-4-(1,1,2-trifluoro-2-trifluoromethoxyethoxy)phenyl]-3-(2,6-difluorobenzoyl)urea or suitable salt forms thereof, and 1-(2-chlorobenzoyl)-3-(4-trifluoromethoxyphenyl)urea or suitable salt forms thereof wherein both said compounds are concurrently present on a treated fruit tree or fruit crop, for the control of undesired pests, in certain preferred embodiments, for the control of Codling moths in fruit crops.

The control of undesired insect pests in orchards of fruit trees is of significant technical and agricultural importance, as the infestation of such pests in fruits reduces the attractiveness of the fruit crop as well as reducing the overall useful fruit crop yield. Such is undesirable not only from a commercial standpoint, but perhaps more importantly from a supply-side standpoint in reducing the useful yields which can then be made available for ultimate human consumption. Thus, minimization of the incidence of such undesired fruit pests in orchards of fruit trees is very desirable. Furthermore, minimization of the quantities of active agents, e.g.., pesticides, insecticides, etc. is also very desirable in reducing the amounts of and/or the frequency of application of such active agents onto fruit crops, e.g., fruit trees.

The prior art had suggested various active agents and regimens for their application for the control of certain undesired pests on fruit crops. Such include those published in the following documents: "Use Your New Control Options in Pest Control: Focus on Codling Moth and Leafrollers", by Jay. F. Brunner, et al. (Washington State University, Tree Fruit Research and Extension Center, Wenatchee, WA (2004)); "Codling Moth Control with Rimon (Novaluron) and Other Reduced Risk Insecticides - Research Trial and Demonstration - IPM Apple Orchard, Kaysville, UT" by Diane Alston, et al., (Utah State University, 2006); Abstract titled "Control of Codling Moth in Large Plot Apple Trials with Diamond 7.5 WG" by Ron Britt et al., an Abstract titled "Control of Codling Moth in Large Plot Apple Trials with Diamond 7.5 WG" by Vernon Fischer et al., and an Abstract titled "Managing Codling Moth in Southern Oregon Pear Orchards: Neonicotenoids, Novaluron, and Granulosis Virus" by Richard J. Hilton, et al., an Abstract titled "Efficacy and Field Longevity of Insecticides Used for Codling Moth" by Chuck A. Ingels, et al., and an Abstract titled "Codling Moth Control Strategies with New Chemistries" by Keith R. Granger, et al., all of the foregoing published as "Abstracts of the 78th Annual Western Orchard Pest & Disease Management Conference", published by Washington State University, Pullman, WA (2004). Further publications include a protocol published by the Ontario - Ministry of Agriculture, Food & Rural Affairs titled "Codling moth programs", listing Kathryn Carter as the author, and that this internet publication was made available 24.April.2008.

EP0070078 describes insecticidal compositions comprising phosmet and diflubenzuron.

As indicated in the foregoing most of the foregoing regimens require the sequential application of different classes of pesticides, typically at relatively high dosages of active constituents in order to provide satisfactory control of undesired insects pests, particularly of Codling moths. This specific pest is particularly pernicious as it infests the growing fruit and is known to devour part of the interior thereof during its growth cycle. Such results in visually unattractive fruit, when on it is interior is also discolored and/or partially consumed, each of which foregoing factors require the discarding of the otherwise ripened fruit. Thus, there remains a real need in the art for further improved treatment compositions, and treatment regimens for the improved control of undesired pests, particularly Codling moths on fruit crops. It is to these and further needs that the various aspects of the present invention are directed.

In a first aspect the present invention provides improved treatment compositions for the control of undesired pests prone to infest fruit crops.

In a second aspect the present invention provides improved treatment regimens for the control of undesired pests prone to infest fruit crops, which regimens comprise the use of and application of the improved treatment compositions according to the first aspect of the invention.

According to a third aspect, the present invention provides more environmentally acceptable compositions and methods for the control of undesired pests prone to infest fruit crops.

These and further aspects of the invention will become more evident from a careful review of the following specification.

In one aspect the present invention provides a mixture or blend of a first pesticidally effective compound, O, O-dimethyl S-phthalimidomethyl phosphorodithioate, or identified by the following chemical structure (I): 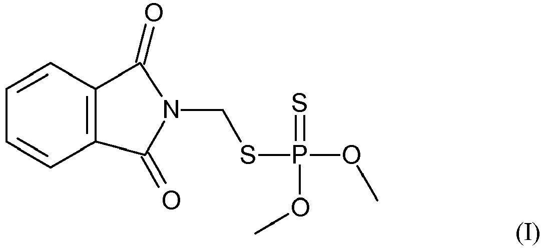 which may also optionally provided as an agronomically or nonagronomically suitable salt thereof, the foregoing first said compound or salt thereof being hereinafter interchangeably referred to as "phosmet", in combination with a second pesticidally effective compound, namely at least one benzoylurea based chitin inhibiting compound which is one or more of (RS)-1-[3-chloro-4-(1,1,2-trifluoro-2-trifluoromethoxyethoxy)phenyl]-3-(2,6-difluorobenzoyl)urea or suitable salt forms thereof, and 1-(2-chlorobenzoyl)-3-(4-trifluoromethoxyphenyl)urea or suitable salt forms thereof, any of the foregoing which combination has been observed by the present inventors to provide a synergistically effective benefit in the control of undesired pests prone to infest fruit crops, and especially Codling moths which may be present on or within such fruit crops.

The forgoing compound (I), phosmet, is presently commercially available from the Gowan Co. (Yuma, AZ) under the tradename Imidan® and is a typically classified within the general class of pesticidal compounds typically identified as organophosphates.

The (RS)-1-[3-chloro-4-(1,1,2-trifluoro-2-trifluoromethoxyethoxy)phenyl]-3-(2,6-difluorobenzoyl)urea, or "novaluron" may be represented by the following chemical structure (II): 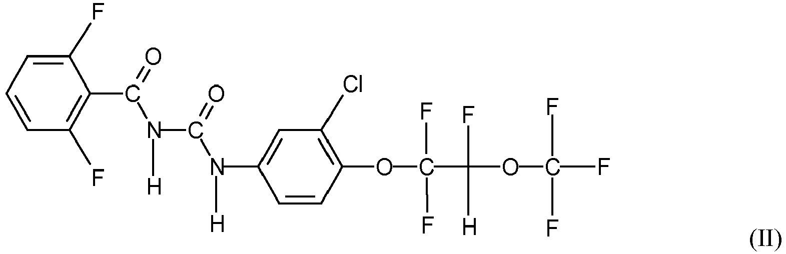 which may optionally be applied as an agronomically or a nonagronomically acceptable salt form thereof. This compound is presently commercially available from Makhteshim Agan of North America, Inc., New York, NY) under the tradename Rimon® and is typically classified as an insect growth regulator, or as a chitin inhibitor.

The 1-(2-chlorobenzoyl)-3-(4-trifluoromethoxyphenyl)urea, or "triflumuron" may be represented by the following chemical structure (III): 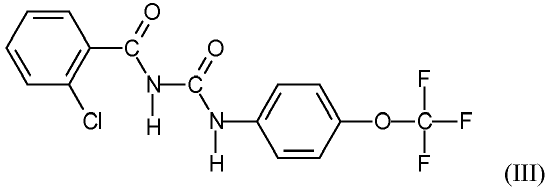 which may optionally be applied as an agronomically or nonagronomically acceptable salt form thereof. This compound is presently commercially available from a variety of suppliers.

The present inventors had surprisingly observed that when these two materials, viz, phosmet and at least one benzoylurea based chitin inhibiting compound selected from novaluron and/or triflumuron compounds, were combined with one another and/or concurrently present on plant part, especially a fruit crop or fruit tree, notwithstanding completely different modes of operation in which they provided a pest regulating effect, an unexpected improvement in the overall control of undesired insect pests, particularly of Codling moths, was observed. Such a result was observed, although such a result was unexpected.

Advantageously the inventors' discovery now permits for the use of reduced amounts of phosmet and at least one benzoylurea based chitin inhibiting compound which of provides improved treatment regimens for the control of undesired pests prone to infest fruit crops, as reduced amounts of one or both of the phosmet and/or the at least one benzoylurea based chitin inhibiting compound may now be applied without compromising the expectation of satisfactory control of pests in and among the fruit crop.

Alternately thereto, or in addition thereto, the inventors' discovery may provide improvements in treatment regimens in the treatment of fruit crops, as reduced amounts of the active constituents, namely one or both of the O, O-dimethyl S-phthalimidomethyl phosphorodithioate (and/or salts), viz., "phosmet", and/or the at least one benzoylurea based chitin inhibiting compound (the (RS)-1-[3-chloro-4-(1,1,2-trifluoro-2-trifluoromethoxyethoxy)phenyl]-3-(2,6-difluorobenzoyl)urea (and/or salts thereof), and/or the 1-(2-chlorobenzoyl)-3-(4-trifluoromethoxyphenyl)urea (and/or salts thereof)) may permit for either a reduced frequency of treatment of the fruit crops or fruit trees, either before and/or during and/or after the growth period of the fruit crops on said fruit trees, or require reduced frequency of treatment applications of the said active constituents, as well as potentially permitting for both reduced frequency of treatment of the fruit crops or fruit trees as well as the use of relatively reduced amounts of the active constituents as compared to prior art treatment regimens which had applied in separate application steps but in which both the phosmet and the at least one benzoylurea based chitin inhibiting compound were applied together or in the same application treatment step.

The inventors' discovery also has important environmental benefits as well. The inventors' discovery permits for the possible reduction in the number of application steps or the reduction in the amount of treatment compositions which need be applied to fruit crops in order to provide a satisfactory pesticidal benefit.

The present invention thus improved treatment compositions for the control of undesired pests prone to infest fruit crops, especially pome fruit crops (e.g., apples, pears). Such improved treatment compositions may comprises at least one of phosmet or at least one benzoylurea based chitin inhibiting compound but preferably comprise both in a single compositions. It is to be understood that the present invention contemplates a method whereby pesticidal effect of amounts of one of phosmet or at least one benzoylurea based chitin inhibiting compound or applied from separate compositions, but that sufficient amounts of one or both of phosmet or at least one benzoylurea based chitin inhibiting compound are nonetheless concurrently present upon a fruit fruit tree in order to provide the improved synergistic benefits described herein. The invention thus specifically provides for compositions comprising both of phosmet and at least one benzoylurea based chitin inhibiting compound which include, without limitation concentrate compositions, pre-mixture compositions, tank-mixed compositions comprising each of phosmet and at least one benzoylurea based chitin inhibiting compound which simultaneously present when applied to a fruit crop and/or fruit tree grown for, or bearing a fruit crop. The invention further also specifically provides for separate compositions, which comprise only one of either the phosmet or the at least one benzoylurea based chitin inhibiting compound which compositions may also be, without limitation, concentrate compositions, pre-mixture compositions, or other product forms which may be separately applied to a fruit crop and/or fruit tree grown for, or bearing a fruit crop. In this latter instance, one of either the phosmet or at least one benzoylurea based chitin inhibiting compound is separately applied from its respective composition but is nonetheless each of the phosmet and the at least one benzoylurea based chitin inhibiting compound are simultaneously present upon a fruit crop and/or fruit tree grown for, or bearing a fruit crop.

Advantageously, when either only one of, or both of phosmet and at least one benzoylurea based chitin inhibiting compound are provided in a composition which may include one or more adjunct materials, e.g. solid carriers, liquid carriers, which may further optionally include one or more for the adjunct materials which can provide a technical benefit, e.g., surfactants, further biologically active materials, and the like. Such a composition may be provided as a premix composition or concentrate composition containing one or both of phosmet and at least one benzoylurea based chitin inhibiting compound , which is intended to be diluted or admixed to further materials in order to form a treatment composition therefrom suited for application to a fruit crop or fruit tree. Alternately such a composition may be supplied in a ready-to-use form requiring no further dilution or ad mixing in order to form a suitable treatment composition therefrom. Preferred embodiments of the inventive compositions or run include both of phosmet and at least one benzoylurea based chitin inhibiting compound, in suitable amounts such that in any treatment composition formed therefrom and prior to application, advantageously each out of the phosmet and at least one benzoyl chitin inhibiting compound are present in respective weight ratios of between 1:100 to 100:1 of the former to the latter said compound. More preferred respective weight ratios of the phosmet to the at least one benzoylurea based chitin inhibiting compound include one or more of the following respective weight ratios: 1:99, 2:98; 5:95; 7.5:92.5; 10:90; 12.5:87.5; 15:85; 17.5:82.5; 20:80; 22.5:77.5; 25:75; 27.5:72.5; 30:70; 32.5:67.5; 35:65; 37.5:62.5; 40:60; 42.5:57.5; 45:55; 47.5:52.5; 50:50; 52.5:47.5; 55:45; 57.5:42.5; 60:40; 62.5:37.5; 65:35; 67.5:32.5; 70:30; 72.5:27.5; 75:25; 77.5:22.5; 80:20; 82.5:17.5; 85:15; 87.5:12.5; 90:10; 92.5:7.5; 95:5; 97.5:2.5; 98:2 and 99:1.

Alternatively, wherein the phosmet and the at least one benzoylurea based chitin inhibiting compound are used in providing or forming two separate treatment compositions which are separately applied to a fruit crop and/or fruit tree grown for or bearing a fruit crop from separate compositions, advantageously the ultimate weight ratio of the phosmet to the at least one benzoylurea based chitin inhibiting compound which is applied from separate compositions falls within the above preferred respective weight ratios. In such a situation, the total weight of the two separate treatment compositions, one of each which separately includes one of either the phosmet or the at least one benzoylurea based chitin inhibiting compound may be used to calculate the total amount of the two separate compositions applied per unit coverage area, e.g, plant, tree, ground area, etc. which it thus considered a treatment composition. Thus, the total amounts of the phosmet and of the at least one benzoylurea based chitin inhibiting compound may be calculated on such a combined weight basis, and therefrom the respective weight ratios of these compounds can be determined by routine analytical methods, or alternately by routine calculation. In the case the latter situation, wherein two separate treatment compositions are used to separately apply one of either the phosmet or the at least one benzoylurea based chitin inhibiting compound, and a further separate treatment composition is used to apply the other of the phosmet or the at least one benzoylurea based chitin inhibiting compound , it is only required that both the phosmet and the at least one benzoylurea based chitin inhibiting compound be simultaneously present upon a fruit crop and/or fruit tree grown for, or bearing a fruit crop. This recognizes that a time interval may be permitted to elapsed between the application of each of the two foregoing separate treatment compositions. Ir preferred embodiments, the two foregoing separate treatment compositions and the time interval between their applications is minimize, is preferably less than 48 hours there between, and in order of preference time interval between the application of the separate treatment compositions is not more than 42, 40, 38, 36, 34, 32, 30, 28, 26, 24, 22, 20, 18, 17, 16, 15, 14, 13, 12, 11, 10, 9, 8, 7, 6, 5, 4, 3, 2, 1, 0.75, 0.5, and 0.25 hours. Such decreased amounts of time between applications of the said foregoing separate treatment compositions improves the retention of the first of the applied compounds, either the phosmet or the at least one benzoylurea based chitin inhibiting compound prior to the application of the other of these said compounds which had not been applied. Consequently, such improves the likelihood of an improved efficacy against undesired insect pests, as described elsewhere in this specification. Again, however as noted previously in particularly preferred embodiments both of the phosmet and the at least one benzoylurea based chitin inhibiting compound are simultaneously applied within one treatment application step or treatment application process step such that both of the phosmet and the at least one benzoylurea based chitin inhibiting compound or simultaneously or concurrently delivered to a fruit crop and/or fruit tree grown for, or bearing a fruit crop. Such simultaneous application reduces the likelihood of an applied treatment composition being washed away such as my rainwater, spraying of further treatment compositions, including that of a subsequent treatment composition as may be applied to the a fruit crop and/or fruit tree grown for, or bearing a fruit crop.

The amount or application rate of the phosmet may be varied according to the needs of the particular environmental conditions, the type of fruit crop being grown. It is well recognized that such environmental conditions vary widely between geographic regions, as well as seasons of the year. The phosmet may be applied to a fruit crop and/or fruit tree grown for, or bearing a fruit crop, in any amounts which is found to be effective in providing a desired degree of control of unwanted insect pests, when said compound is concurrently present upon the fruit crop and/or fruit tree grown for, or bearing a fruit crop with an effective amount of the at least one benzoylurea based chitin inhibiting compound. Advantageously the phosmet may be applied to a fruit crop and/or fruit tree grown for, or bearing a fruit crop, at delivery rates of 0.01 lbs. -10 lbs. per acre of crop treated, preferably at delivery rates of 0.5 to 5 lbs. per acre of crop being tree especially preferably between 1 and 3.5 lbs. per acre of crop being treated. The phosmet may be applied to a fruit crop and/or fruit tree grown for, or bearing a fruit crop, either a single time during the year or growing season for the fruit crop but is often advantageously applied two or more times to the fruit crop and/or fruit tree grown for, or bearing a fruit crop, during the growing season. The at least one benzoylurea based chitin inhibiting compound may be applied according to similar guidelines, as it is similarly recognized that the amount or application rate of the at least one benzoylurea based chitin inhibiting compound may be varied according to the needs of the particular environmental conditions, the type of fruit crop being grown. The at least one benzoylurea based chitin inhibiting compound may be applied to a fruit crop and/or fruit tree grown for, or bearing a fruit crop, in any amounts which is found to be effective in providing a desired degree of control of unwanted insect pests, when said compound is concurrently present upon the fruit crop and/or fruit tree grown for, or bearing a fruit crop with an effective amount of the phosmet. Advantageously the at least one benzoylurea based chitin inhibiting compound may be applied to a fruit crop and/or fruit tree grown for, or bearing a fruit crop, at delivery rates of 0.01 to 10 lbs. per acre of crop being treated, preferably at delivery rates of 0.05 - 5 lbs. per acre of crop being treated. The at least one benzoylurea based chitin inhibiting compound may be applied to the said may be applied to a fruit crop and/or fruit tree grown for, or bearing a fruit crop, either a single time during the year or growing season for the fruit crop but is often advantageously applied two or more times to the fruit crop and/or fruit tree grown for, or bearing a fruit crop, during the growing season. By way of nonlimiting example, application rates to specific crops include those demonstrated in one or more of the following examples described hereafter; such include preferred application rates as well as application regimens. It is of course to be understood that other application rates, timing frequencies, and the like may be practiced in order to enjoy the full benefits of the present invention.

Any of the compositions of the invention, including any prepared treatment composition of the invention, which includes at least one of phosmet or at least one benzoylurea based chitin inhibiting compound , but which preferably simultaneously include both phosmet and at least one benzoylurea based chitin inhibiting compound , may include still further optional constituents which will be recognized as be commonly encountered adjunct materials useful in pesticidal compositions, particularly largely aqueous pesticidal compositions which are adapted to be applied by conventional spraying methods and machinery. Such include, by way of non-limiting example: surfactants, solid carriers, liquid carriers, safeners, oils, wetters, dispersants, emulsifiers, preservatives, antifreeze agents, solvents, oils, fillers, colorants, carriers, antifoams, evaporation inhibitors, pH regulators, viscosity regulators, as well as one or more further adjunct materials which can provide a technical or biological benefit. Non-limiting examples of such adjunct materials include the following.

Exemplary fungicides which may be used in the plant treatment compositions of the invention include one or more of: 2-phenylphenol; 8-hydroxyquinoline sulfate; AC 382042; Ampelomyces quisqualis; Azaconazole; Azoxystrobin; Bacillus subtilis; Benalaxyl; Benomyl; Biphenyl; Bitertanol; Blasticidin-S; Bordeaux mixture; Borax; Bromuconazole; Bupirimate; Calboxin; calcium polysulfide; Captafol; Captan; Carbendazim; Carpropanmid (KTU 3616); CGA 279202; Chinomethionat; Chlorothalonil; Chlozolinate; copper hydroxide; copper naphthenate; copper oxychloride; copper sulfate; cuprous oxide; Cymoxanil; Cyproconazole; Cyprodinil; Dazomet; Debacarb; Dichlofluanid; Dichlomezine; Dichlorophen; Diclocymet; Dicloran; Diethofencarb; Difenoconazole; Difenzoquat; Difenzoquat metilsulfate; Diflumetorim; Dimethirimol; Dimethomorph; Diniconazole; Diniconazole-M; Dinobuton; Dinocap; diphnenylamine; Dithianon; Dodemorph; Dodemorph acetate; Dodine; Dodine free base; Edifenphos; Epoxiconazole (BAS 480F); Ethasulfocarb; Ethirimol; Etridiazole; Famoxadone; Fenamidone; Fenarimol; Fenbuconazole; Fenfin; Fenfuram; Fenhexamid; Fenpiclonil; Fenpropidin; Fenpropimorph; Fentin acetate; Fentin hydroxide; Ferbam; Ferimzone; Fluazinam; Fludioxonil; Fluoroimide; Fluquinconazole; Flusilazole; Flusulfamide; Flutolanil; Flutriafol; Folpet; formaldehyde; Fosetyl; Fosetyl-aluminum; Fuberidazole; Furalaxyl; Fusarium oxysporum; Gliocladium virens; Guazatine; Guazatine acetates; GY-81; hexachlorobenzene; Hexaconazole; Hymexazol; ICIA0858; IKF-916; Imazalil; Imazalil sulfate; Imibenconazole; Iminoctadine; Iminoctadine triacetate; Iminoctadine tris[Albesilate]; Ipconazole; Iprobenfos; Iprodione; Iprovalicarb; Kasugamycin; Kasugamycin hydrochloride hydrate; Kresoxim-methyl; Mancopper; Mancozeb; Maneb; Mepanipyrim; Mepronil; mercuric chloride; mercuric ox mercurous chloride; Metalaxyl; Metalaxyl-M; Metam; Metam-sodium; Metconazole; Methasulfocarb; methyl isothiocyanate; Metiram; Metominostrobin (SSF-126); MON65500; Myclotbutanil; Nabam; naphthenic acid; Natamycin; nickel bis(dimethyldithiocarbamate); Nitrothal-isopropyl; Nuarimol; Octhilinone; Ofurace; oleic acid (fatty acids); Oxadixyl; Oxine-copper; Oxycarboxin; Penconazole; Pencycuron; Pentachlorophenol; pentachlorophenyl laurate; Perfurazoate; phenylmercury acetate; Phlebiopsis gigantea; Phthalide; Piperalin; polyoxin B; polyoxins; Polyoxorim; potassium hydroxyquinoline sulfate; Probenazole; Prochloraz; Procymidone; Propamocarb; Propamocarb Hydrochloride; Propiconazole; Propineb; Pyrazophos; Pyributicarb; Pyrifenox; Pyrimethanil; Pyroquilon; Quinoxyfen; Quintozene; RH-7281; sec-butylamine; sodium 2-phenylphenoxide; sodium pentachlorophenoxide; Spiroxamine (KWG 4168); Streptomyces griseoviridis; sulfur; tar oils; Tebuconazole; Tecnazene; Tetraconazole; Thiabendazole; Thifluzamide; Thiophanate-methyl; Thiram; Tolclofos-methyl; Tolylfluanid; Triadimefon; Triadimenol; Triazoxide; Trichoderma harzianum; Tricyclazole; Tridemorph; Triflumizole; Triforine; Triticonzole; Validamycin; vinclozolin; zinc naphthenate; Zineb; Ziram; the compounds having the chemical name methyl (E,E)-2-(2-(1-(1-(2-pyridyl)propyloxyimino)-1-cyclopropylmethyloxymethyl)p henyl)-3-ethoxypropenoate and 3-(3,5-dichlorophenyl)-4-chloropyrazole.

When present the one or more fungicides, may be included in any effective amount, and advantageously are present in amounts of from 1 ppm to 50 ppm, preferably 1 ppm to 10 ppm based on the total weight of a treatment composition of the invention which it forms a part, as applied to a fruit crop and/or fruit tree. The concentration of such one or more fungicides will of course be expected to be higher when present in a concentrated form of the composition of the invention, e.g., a concentrate form which is supplied to the ultimate user of the produce, e.g. grower, wherein such a concentrate is intended to be diluted in a liquid and/or solid carrier, e.g., largely aqueous tank mixes wherein the dilution ratio of the concentrate form to the liquid and/or solid carrier is intended to provide a treatment composition to be used directly upon trees or crops.

In addition to the phosmet and/or at least one benzoylurea based chitin inhibiting compound , treatment compositions of the invention may further include one or more further different pesticides. Exemplary further pesticides include insecticide and nematocides, which be used singly or in mixtures in treatment compositions of the invention. By way of non-limiting example such include one or more of: Abamectin; Acephate; Acetamiprid; oleic acid; Acrinathrin; Aldicarb; Alanycarb; Allethrin [(1R) isomers]; .alpha.-Cypermethrin; Amitraz; Avermectin B1 and its derivatives, Azadirachtin; Azamethiphos; Azinphos-ethyl; Azinphosmethyl; Bacillus thurigiensi; Bendiocarb; Benfuracarb; Bensultap; .beta.-cyfluthrin; .beta.-cypermethrin; Bifenazate; Bifenthrin; Bioallathrin; Bioallethrin (S-cyclopentenyl isomer); Bioresmethrin; Borax; Buprofezin; Butocarboxim; Butoxycarboxim; piperonyl butoxide; Cadusafos; Carbaryl; Carbofuran; Carbosulfan; Cartap; Cartap hydrochloride; Chordane; Chlorethoxyfos; Chlorfenapyr; Chlorfenvirnphos; Chlormephos; Chloropicrin; Chlorpyrifos; Chlorpyrifos-methyl; mercurous chloride; Coumaphos; Cryolite; Cryomazine; Cyanophos; calcium cyanide; sodium cyanide; Cycloprothrin; Cyfluthrin; Cyhalothrin; cypermethrin; cyphenothrin [(1R) transisomers]; Dazomet; DDT; Deltamethrin; Demeton-S-methyl; Diafenthiuron; Diazinon; ethylene dibromide; ethylene dichloride; Dichlorvos; Dicofol; Dicrotophos; Dimethoate; Dimethylvinphos; Diofenolan; Disulfoton; DNOC; DPX-JW062 and DP; Empenthrin [(EZ)-(1R) isomers]; Endosulfan; ENT 8184; EPN; Esfenvalerate; Ethiofencarb; Ethion; Ethiprole having the chemical name 5-amino-3-cyano-1-(2,6-dichloro-4-trifluoromethylphenyl)-4-ethylsulfinylpy razole; Ethoprophos; Etofenprox; Etoxazole; Etrimfos; Famphur; Fenamiphos; Fenitrothion; Fenobucarb; Fenoxycarb; Fenpropathrin; Fenthion; Fenvalerate; Fipronil and the compounds of the arylpyrazole family; Flucythrinate; Flufenprox; Flumethrin; Fluofenprox; sodium fluoride; sulfuryl fluoride; Fonofos; Formetanate; Formetanate hydrochloride; Formothion; Furathiocarb; Gamma-HCH; GY-81; Halofenozide; Heptachlor; Heptenophos; sodium hexafluorosilicate; tar oils; petroleum oils; Hydramethylnon; hydrogen cyanide; Hydroprene; Imidacloprid; Imiprothrin; Indoxacarb; Isazofos; Isofenphos; Isoprocarb; Methyl isothiocyanal; Isoxathion; lambda-Cyhalothrin; pentachlorophenyl laurate; Malathion; MB-599; Mecarbam; Methacrifos; Methamidophos; Methidathion; Methiocarb; Methomyl; Methoprene; Methoxychlor; Metolcarb; Mevinphos; Milbemectin and its derivatives; Monocrotophos; Naled; nicotine; Nitenpyram; Nithiazine; Omethoate; Oxamyl; Oxydemeton-methyl; Paecilomyces fumosoroseus; Parathion; Parathion-methyl; pentachlorophen pentachlorophenoxide; Permethrin; Penothrin [(IR)-trans-isomers]; Phenthoate; Phorate; Phosalone; Phosphamidon; phosphine; aluminum phosphide; magnesium phosphide; zinc phosphide; Phoxim; Pirimicarb; Pirimiphos-ethyl; Pirimiphos-methyl; calcium polysulfide; Prallethrin; Profenfos; Propaphos; Propetamphos; Propoxur; Prothiofos; Pyraclofos; pyrethrins (chrysanthemates, pyrethrates, pyrethrum; Pyretrozine; Pyridaben; Pyridaphenthion; Pyrimidifen; Pyriproxyfen; Quinalphos; Resmethrin; RH-2485; Rotenone; RU 15525; Silafluofen; Sulcofuron-sodium; Sulfotep; sulfuramide; Sulprofos; Ta-fluvalinate; Tebufenozide; Tebupirimfos; Tefluthrin; Temephos; Terbufos; Tetrachlorvinphos; Tetramethrin; Tetramethrin [(1R) isomers]; .theta.-cypermethrin; Thiametoxam; Thiocyclam; Thiocyclam hydrogen oxalate; Thiodicarb; Thiofanox; Thiometon; Tralomethrin; Transfluthrin; Triazamate; Triazophos; Trichlorfon; Trimethacarb; Vamidothion; XDE-105; XMC; Xylylcarb; Zeta-cypermethrin; ZXI 8901; the compound whose chemical name is 3-acetyl-5-amino-1-[2,6-dichloro-4-(trifluoromethyl)phenyl]-2-methylsulfinylpyrazole.

When present the one or more such further pesticides, may be included in any effective amount, and advantageously are present in amounts of from 5 ppm to 50,phosmet ppm, preferably 10 ppm to 10,phosmet ppm, based on the total weight of a treatment composition of the invention which it forms a part, as applied to a fruit crop and/or fruit tree. The concentration of such one or more additional pesticides will of course be expected to be higher when present in a concentrated form of the composition of the invention, e.g., a concentrate form which is supplied to the ultimate user of the produce, e.g. grower, wherein such a concentrate is intended to be diluted in a liquid and/or solid carrier, e.g., largely aqueous tank mixes wherein the dilution ratio of the concentrate form to the liquid and/or solid carrier is intended to provide a treatment composition to be used directly upon trees or crops.

Surfactants may be used as adjunct materials. Exemplary useful surfactants include those which may be of the ionic and nonionic type, such as aromatic-based surfactants, e.g., surface-active benzenes or phenols which are substituted by one or more alkyl groups and have subsequently been derivatized, or nonaromatic-based surfactants, for example heterocycle-, olefin-, aliphatic- or cycloaliphatic-based surfactants, for example surface-active pyridine, pyrimidine, triazine, pyrrole pyrrolidine, furan, thiophene, benzoxazole, benzothiazole and triazole compounds which are substituted by one or more alkyl groups and have subsequently been derivatized.

Examples of aromatic surfactants include phenols, phenyl (C₁-C₄)alkyl ethers or (poly)alkoxylated phenols for example those having 1 to 50 alkyleneoxy units in the (poly)alkyleneoxy moiety, where the alkylene moiety has preferably in each case 1 to 4 carbon atoms, preferably phenol which has been reacted with 3 to 10 mol of alkylene oxide, (poly)alkylphenols or (poly)alkylphenol alkoxylates for example those having 1 to 12 carbon atoms per alkyl radical and 1 to 150 alkyleneoxy units in the polyalkyleneoxy moiety, preferably triisobutylphenol or tri-n-butylphenol which has been reacted with 1 to 50 mol of ethylene oxide, polyarylphenols or polyarylphenol alkoxylates, for example tristyrylphenol polyalkylene glycol ethers with 1 to 150 alkyleneoxy units in the polyalkyleneoxy moiety, preferably tristyrylphenol which has been reacted with 1 to 50 mol of ethylene oxide, compounds which formally constitute the reaction products of the foregoing molecules with sulfuric acid or phosphoric acid and their salts which have been neutralized with suitable bases, for example the acid phosphoric ester of the triethoxylated phenol, the acid phosphoric ester of a nonylphenol which has been reacted with 9 mol of ethylene oxide, and the triethanolamine-neutralized phosphoric acid ester of the reaction product of 20 mol of ethylene oxide and 1 mol of tristyrylphenol, and, acid (poly)alkyl- and (poly)arylbenzenesulfonates which have been neutralized with suitable bases, for example having 1 to 12 carbon atoms per alkyl radical, or having up to 3 styrene units in the polyaryl radical, preferably (linear) dodecylbenzenesulfonic acid and its oil-soluble salts such as, for example, the isopropylammonium salt of dodecylbenzenesulfonic acid.

Examples of nonaromatic surfactants are described hereinafter wherein it is to be understood that "EO" represents ethylene oxide units, "PO" represents propylene oxide units and "BO" represents butylene oxide units. Usually, in the case of the alkyleneoxy units, ethyleneoxy, propyleneoxy and butyleneoxy units, in particular ethyleneoxy units, are preferred.

Exemplary nonaromatic surfactants include fatty alcohols having 10-24 carbon atoms with 0-60 EO and/or 0-20 PO and/or 0-15 BO in any desired sequence. The terminal hydroxyl groups of these compounds can be terminally capped by a cycloalkyl or acyl radical having 1-24 carbon atoms. Examples of such compounds are commercially available in the Genapol® C,L,O,T,UD,UDD,X (ex. Clariant), Plurafac® and Lutensol® A,AT,ON,TO (ex. BASF), Marlipal®24 and 013 (ex. Condea), Dehypon® (ex. Henkel), series of surfactants, as well as anionic derivatives of the immediately foregoing described nonaromatic surfactants in the form of ether carboxylates, sulfonates, sulfates and phosphates and their inorganic salts (for example alkali metal salts and alkaline earth metal salts) and/or their organic salts (for example on an amine or alkanolamine base) such as are presently commercially available as Genapol® LRO, Sandopan®, and Hostaphat/Hordaphos® series of surfactants (ex. Clariant.) Further exemplarly useful nonaromatic surfactants include copolymers composed of EO,PO and/or BO units such as, for example, block copolymers such as those currently commercially available as Pluronic® (ex. BASF) having a molecular weight of 400 to 10⁸. Further useful nonaromatic surfactants include alkylene oxide adducts of C₁-C₉alcohols such as Atlox® 5phosmet (ex. Uniquema).

Further useful nonaromatic surfactants include anionic derivatives of certain of the foregoing nonaromatic surfactants in the form of ether carboxylates, sulfonates, sulfates and phosphates and their inorganic salts (for example alkali metal salts and alkaline earth metal salts) and organic salts (for example on an amine or alkanolamine base). Still further useful nonaromatic surfactants include fatty acid and triglyceride alkoxylates, salts of aliphatic, cycloaliphatic and olefinic carboxylic acids and polycarboxylic acids, and alpha-sulfofatty acid esters, fatty acid amide alkoxylates, alkylene oxide adducts of alkyne diols such as are presently commercially available as Surfynol® (ex. Air Products).

Yet further useful nonaromatic surfactants which may be used include sugar derivatives such as amino and amido sugars, glucitols, alkyl polyglycosides such are presently commercially available as APG® (ex. Henkel), sorbitan esters such as are available as Span® or Tween® surfactants (ex. Uniquema), cyclodextrin esters or ethers from (ex. Wacker), surface-active cellulose and algin, pectin and guar derivatives, and guar derivatives.

Still further useful nonaromatic surfactants include alkylene oxide adducts on a polyol base, surface-active polyglycerides, sulfosuccinates, alkanesulfonates, paraffin- and olefinsulfonates, alkylene oxide adducts of fatty amines, surface-active, zwitterionic compounds including as taurides, betaines and sulfobetaines, perfluorinated as well as polyfluorinated surface-active compounds such as are presently commercially available as Fluowet®. (ex. Clariant), or Bayowet® (ex. Bayer), or Zonyl® (ex. DuPont) series of products.

Yet further useful as nonaromatic surfactants are surface-active polyacrylic and methacrylic derivatives such as the Sokalan® (ex. BASF) materials, surface-active polyamides such as modified gelatin or derivatized polyaspartic acid (e.g., ex. Bayer) and their derivatives, surface-active polymers based on maleic anhydride and/or reaction products of maleic anhydride, and copolymers comprising maleic anhydride and/or reaction products of maleic anhydride, surface-active derivatives of polyethylene and polypropylene waxes, surface-active phosphonates and phosphinates such as are presently commercially available as Fluowet®-PL (ex. Clariant) and, poly- or perhalogenated surfactants such as, for example, Emulsogen®-1557 (ex. Clariant).

Further surfactants include silicone based surfactants, viz, those which include at least one silicone atom. Such are per se, known to the art.

When present the one or more surfactants which may be present will be included in effective amounts. In general, the total concentration of any surfactants present in a composition according to the invention is advantageously from about 0.001 to about 5% by weight, preferably 0.1 to 2.0% by weight, in particular 0.1 to 0.5% by weight, based on the total weight of a treatment composition of which it forms a part.

While the treatment compositions of the invention are primarily intended to provide a pesticidal benefit, nonetheless the treatment compositions may include one or more herbicides to provide such an auxiliary benefit. It is contemplated that essentially, any other chemical compounds or compounds which are known to provide a herbicidal effect may be used in conjunction with the phosmet and at least one benzoylurea based chitin inhibiting compound compounds. By way of non-limiting example such non-sulfonylurea based herbicides include one or more of: carbamates, thiocarbamates, haloacetanilides, substituted phenoxy-, naphthoxy- and phenoxyphenoxycarboxylic acid derivatives, and heteroaryloxyphenoxyalkanecarboxylic acid derivatives suc quinolyloxy-, quinoxalyloxy-, pyridyloxy-, benzoxazolyloxy- and benzothiazolyloxyphenoxyalkanecarboxylic esters, cyclohexanedione derivatives, imidazolinones, phosphorus-containing herbicides, for example of glufosinate type or of the glyphosate type, pyrimidinyloxypyridinecarboxylic acid derivatives, pyrimidyloxybenzoic acid derivatives, triazolopyrimidinesulfonamide derivatives and S-(N-aryl-N-alkylcarbamoylmethyl)dithiophosphoric esters. Preferred in this context are phenoxyphenoxy- and heteroaryloxyphenoxycarboxylic acid esters and salts, imidazolinones and herbicides such as bentazone, cyanazine, atrazine, dicamba or hydroxybenzonitriles such as bromoxynil and ioxynil and other foliar-acting herbicides. Further and more specific examples of herbicides which may be included in treatment compositions include herbicides from the following groups of compounds (referred to by the "common names" under the reference "The Pesticide Manual" 11th Ed., British Crop Protection Council 1997, abbreviated to "PM"). By way of non-limiting examples these include one or more of: flumioxazin (PM, pp. 576-577), for example N-(7-fluoro-3,4-dihydro-3-oxo-4-prop-2-inyl-2H-1,4-benzoxazin-6-yl)cyclohex-1-ene-1,2-dicarboxamide; alachlor (PM, pp. 23-24), for example 2-chloro-N-(2,6-diethylphenyl)-N-(methoxymethyl)acetamide; metolachlor (PM, pp.833-834), for example 2-chloro-N-(2-ethyl-6-methylphenyl)-N-(2-methoxy-1-methylethyl)acetamide; acetochlor (PM, pp. 10-12), for example 2-chloro-N-(ethoxymethyl)-N-(2-ethyl-6-methylphenyl)-acetamide; dimethenamid (PM, pp. 409-410), for example 2-chloro-N-(2,4-dimethyl-3-thienyl)-N-(2-methoxy-1-methylethyl)acetamide; pethoxamide, for example 2-chloro-N-(2-ethoxyethyl)-N-(2-methyl-1-phenyl-1-propenyl)acetamide; atrazine (PM, pp. 55-57), for example N-ethyl-N-isopropyl-6-chloro-2,4-diamino-1,3,5-triazine; simazine (PM, pp. 1106-1108), for example 6-chloro-N,N-diethyl-2,4-diamino-1,3,5-triazine; cyanazine (PM, pp. 280-283), for example 2-(4-chloro-6-ethylamino-1,3,5-triazin-2-ylamino)-2-methylpropionitrile; terbuthylazine (PM, ppm.1168-1170), for example N-ethyl-N-tert-butyl-6-chloro-2,4-diamino-1,3,5-triazine; metribuzin (PM, pp. 840-841), for example 4-amino-6-tert-butyl-3-methylthio-1,2,4-triazin-5(4H)-one; isoxaflutole (PM, pp. 737-739), for example (5-cyclopropyl-4-isoxazolyl)[2-(methylsulfonyl)-4-(trifluoromethyl)phenyl] methanone; fluthiamid (=flufenacet) (PM, pp. 82-83), for example 4'-fluoro-N-isopropyl-2-(5-trifluoromethyl-1,3,4-thiadiazol-2-yloxy)acetan ilide; terbutr pp.1170-1172), for example N-(1,1-dimethylethyl)-N-ethyl-6-(methylthio)-1,3,5-triazine-2,4-diamine; pendimethalin (PM, pp. 937-939), for example N-(1-ethylpropyl)-2,6-dinitro-3,4-xylidine; sulcotrione (PM, pp. 1124-1125), for example 2-(2-chloro-4-mesylbenzoyl)cyclohexane-1,3-dione; dicamba (PM, pp. 356-357), for example 3,6-dichloro-o-anisic acid and its salts; mesotrione, for example 2-(4-mesyl-2-nitrobenzoyl)cyclohexane-1,3-dione; linuron (PM, pp. 751-753), for example 3-(3,4-dichlorophenyl)-1-methoxy-1-methylurea; benoxacor (PM, pp.102-103), for example (.+-.)-4-dichloroacetyl-3,4-dihydro-3-methyl-2H-1,4-benzoxazine; metosulam (PM, pp. 836-838), for example 2',6'-dichloro-5,7-dimethoxy-3'-methyl[1,2,4]triazolo[1,5-a]pyrimidine-2-s ulfonamide; flumetsulam (PM, pp. 573-574), for example 2',6'-difluoro-5-methyl[1,2,4]triazolo[1,5-a]pyrimidine-2-sulfonamide; sethoxydim (PM, pp.1101-1103), for example (.+-.)-(EZ)-(1-ethoxyiminobutyl)-5-[2-ethylthio)propyl]-3-hyd roxycyclohex-2-enone; cycloxydim (PM, pp.290-291), for example (.+-.)-2-[1-ethoxyimino)butyl]-3-hydroxy-5-thian-3-ylcyclohex-2-enone; clethodim (PM, pp. 250-251), for example (.+-.)-2-[(E)-1-[(E)-3-chloroallyloxyimino]propyl]-5-[2-(ethylthio)propyl] -3-hydrocyclohex-2-enone; clefoxidim, for example 2-[1-(2-(4-chlorophenoxy)-propoxyimino)butyl]-3-oxo-5-thion-3-ylcyclohex-1 -enol; aclonifen, in particular also including its salts, such as the sodium salt, (PM, pp. 14-15), for example 2-chloro-6-nitro-3-phenoxyanilin; MCPA (PM, pp. 770-771), for example (4-chloro-2-methylphenoxy)acetic acid, predominantly employed forms, inter alia, MCPA-butotyl, MCPA-dimethylammonium, MCPA-isoctyl, MCPA-potassium. MCPA-sodium; 2,4-D (PM, pp. 323-327), for example (2,4-dichloro-phenoxy)acetic acid, frequently employed forms: 2,4-D-butotyl, 2,4-D-butyl, 2,4-D-dimethylammonium, 2,4-D-diolamine, 2,4-D-isooctyl, 2,4-D-isopropyl, 2,4-D-trolamine; bromoxynil (PM, pp. 149-151), for example 3,5-dibromo-4-hydroxybenzonitrile; bentazone (PM, pp. 1064-1066), for example 3-isopropyl-2,2-dioxo-1H-2,1,3-benzothiadiazine-4(3H)-one; fluthiacet (PM, pp. 606-608), for example [2-chloro-4-fluoro-5-[5,6,7,8-tetrahydro-3-oxo-1H,3H-1,3,4-thiadiazolo[3,4-a]pyridazine-1-ylideneamino)phenylthio]acetic acid and preferably the methyl ester; pyridate (PM, pp.1064-1066), for example O-6-chloro-3-phenylpyridazin-4-yl) S-octyl thiocarbonate; diflufenzopyr (BAS 65 00 H, PM, pp. 81-82), for example 2-{1-[4-(3,5-difluorophenyl)semicarbazono]ethyl}nicotinic acid; carfentrazon 191-193), for example ethyl (RS)-2-chloro-3-[2-chloro-5-(4-difluoromethyl-4,5-dihydro-3-methyl-5-oxo-1H-1,2,4-triazol-1-yl)-4-fluorophenyl]propionate, also applied as, inter alia, carfentrazone-ethyl (as stated) or else as the acid; clopyralid (PM, pp. 260-263), for example 3,6-dichloropyridin-2-carboxylic acid; mecoprop, also including mecoprop-p and the esters and salts, (PM, pp. 776-779), for example (RS)-2-(4-chloro-o-tolyloxy)propionic acid; dichlorprop, also including dichlorprop-p and the esters and salts, (PM, pp. 368-372), for example (RS)-2,4-dichlorophenoxy) propionic acid; fluroxypyr, (PM, pp. 597-600), for example 4-amino-3,5-dichloro-6-fluoro-2-pyridyloxyacetic acid; profluazole, for example 1 -chloro-N-[2-chloro-4-fluoro-5-[(6S, 7aR)-6-fluorotetrahydro-1,3-dioxo-1H-pyrrolo[1,2-c]imidazol-2(3H)-yl]phenyl]methanesulfonamide; amicarbazone, for example 4-amino-N-(1,1-dimethylethyl)-4,5-dihydro-3-(1-methylethyl)-5-oxo-1H-1,2,4-triazole-1-carboxamide); trifloxysulfuron, also including its esters and salts, for example the sodium salt, for example N-[[(4,6-dimethoxy-2-pyrimidinyl)amino]carbonyl]-3-(2,2,2-trifluoroethoxy)-2-pyridinesulfonamide; glufosinate, (PM, pp. 643-645), for example D,L-2-amino-4-[hydroxy(methyl)phosphinyl]butanoic acid and its salts and esters; glufosinate-ammonium, (PM, pp. 643-645), for example amonium 4-[hydroxy(methyl)prosphinoyl]-DL-homoalaninate, the monoammonium salt of the acid form; glyphosate, (PM, pp. 646-649), N-(phosphonomethyl)glycine and its salts and esters; glyphosate-isopropylammonium, (PM, pp. 646-649), for example N-(phosphonomethyl)glycine; imazapyr, also including its salts and esters, (PM, pp. 697-699), for example 2-(4-isopropyl-4-methyl-5-oxo-2-imidazol in-2-yl)nicotinic acid; imazethapyr, also including its salts and esters, (PM, pp. 701-703), (RS)-5-ethyl-2-(4-isopropyl-4-methyl-5-oxo-2-imidazolin-2-yl)nicotinic acid; imazamethabenz, also including its salts and esters, (PM, pp. 694-696), for example imazamethabenz-methyl, for example methyl (.+-.)-6-(4-isopropyl-4-methyl-5-oxo-2-imid azolin-2-yl)-m-toluate; imazamox, also including its salts and esters, (PM, pp. 696-697), for example (RS)-2-(4-isopropyl-4-methyl-5-oxo-2-imidazolin-2-yl)-5-methoxymethylnicot inic acid; imazaquin, also including its salts and esters, for example the ammonium salt (PM, pp. 699-701), for example (RS)-2-(4-isopropyl-4-methyl-5-oxo-2-imidazolin-2-yl)qu inol in-3-carboxylic acid; imazapic (AC 263,222), also including its salts and esters, for example the ammonium salt, and 6), for example (RS)-2-(4,5-dihydro-4-isopropyl-4-methyl-5-oxoimidazol-2-yl)-5-methylnicot inic acid; clomazone, also including its salts and esters, for example, 2-[(2-chlorophenyl)methyl]-4,4-dimethyl-3-isoxazolidinone; pyridazinone, also including its salts and esters, and, and triazoles, also including its salts and esters.

When present, these one or more optional herbicides may be present in any amount which is found to be herbicidally effective against unwanted vegetative growth, viz., weeds and the like and at the same time to be not unduly detrimental to the fruit tree or fruit crop onto which it is applied. When present, such further herbicide constituents may be present in any effective amount, which advantageously is generally from about 0.phosmet1%wt. to about 20%wt. based on the total weight of a treatment preparation of which such one or more herbicides forms a part.

One or more safeners may be included in compositions of the invention in effective amounts. Such may be used to mitigate any undesired effects of any other constituents present in an inventive composition. Various classes of chemical compounds are known to the art as effective safeners, non-limiting examples of which include: a) compounds of the dichlorophenylpyrazolin-3-carboxylic acid type, preferably compounds such as ethyl 1-(2,4-dichlorophenyl)-5-(ethoxycarbonyl)-5-methyl-2-pyrazoline-3-carboxylate; b) dichlorophenylpyrazolecarboxylic acid derivatives, preferably compounds such as ethyl 1-(2,4-dichlorophenyl)-5-methylpyrazole-3-carboxylate, ethyl 1-(2,4-dichlorophenyl)-5-isopropylpyrazole-3-carboxylate, ethyl 1-(2,4-dichlorophenyl)-5-(1,1-dimethylethyl)pyrazole-3-carboxylate, ethyl 1-(2,4-dichlorophenyl)-5-phenylpyrazole-3-carboxylate and related compounds; compounds of the triazolecarboxylic acids type, preferably compounds such as ethyl 1-(2,4-dichlorophenyl)-5-trichloromethyl-(1H)-1,2,4-triazole-3-carboxylate and related compounds; compounds of the dichlorobenzyl-2-isoxazoline-3-carboxylic acid type, compounds of the 5-benzyl- or 5-phenyl-2-isoxazoline-3-carboxylic acid type, preferably compounds such as ethyl 5-(2,4-dichlorobenzyl)-2-isoxazoline-3-carboxylate or ethyl 5-phenyl-2-isoxazoline-3-carboxylate and related compounds; e) compounds of the 8-quinolinoxyacetic acid type, preferably compounds such as 1-methylhex-1-yl-(5-chloro-8-quinolinoxy)acetate, 1,3-dimethylbut-1-yl-(5-chloro-8-quinolinoxy)acetate, 4-allyloxy-(5-chloro-8-quinolinoxy)acetate, 1-allyloxy-prop-2-yl-(5-chloro-8-quinolinoxy)acetate, ethyl-(5-chloro-8-quinolinoxy)acetate, methyl-(5-chloro-8-quinolinoxy)acetate, allyl-(5-chloro-8-quinolinoxy)acetate, 2-(2-propylideneiminoxy)-1-ethyl-(5-chloro-8-quinolinoxy)acetate, 2-oxoprop-1-yl-(5-chloro-8-quinolinoxy)acetate and related compounds; f) compounds of the (5-chloro-8-quinolinoxy)malonic acid type, preferably compounds such as diethyl-(5-chloro-8-quinolinoxy)malonate, diallyl-(5-chloro-8-quinolinoxy)malonate, methyl ethyl-(5-chloro-8-quinolinoxy)malonate and related compounds; g) active substances of the type of the phenoxyacetic acid derivatives or phenoxypropionic acid derivatives or of the aromatic carboxylic acids such as, for example, 2,4-dichlorophenoxyacetic acid (and esters), 4-chloro-2-methylphenoxypropionic acid (mecoprop), MCPA or 3,6-dichloro-2-methoxybenzoic acid (and esters) (dicamba); h) compounds of the 5,5-diphenyl-2-isoxaoline-3-carboxylic acid type, preferably ethyl 5,5-diphenyl-2-isoxazoline-3-carboxylate (isoxadifen-ethyl); i) compounds which are known as safeners, for example for rice, such as fenclorim (=4,6-dichloro-2-phenylpyrimidine), dimepiperate (=S-1-methyl-1-phenylethyl piperidine-1-thiocarboxylate), daimuron (=1-(1-methyl-1-phenylethyl)-3-p-tolylurea,), cumyluron (=3-(2-chlorophenylmethyl)-1-(1-methyl-1-phenylethyl) urea), methoxyphenone (=3,3'-dimethyl-4-methoxybenzophenone, as well as CSB (=1-bromo-4-(chloromethylsulfonyl)benzene, CAS-Reg. No. 54091-06-4).

When present the one or more safeners which may be present in effective amounts. In general, the total concentration of any surfactants present is advantageously from about 0.001 to about 5% by weight, preferably 0.1 to 4% by weight, in particular 0.1 to 3% by weight, based on the total weight of a composition of the invention of which it forms a part. The foregoing safeners may beneficially reduce or prevent phytotoxic effects which may occur, or which might be suspected to occur. The application rates of the safeners, can vary within wide limits, but in general, the total concentration of any safener present is advantageously from about 0.001 to about 8% by weight, preferably 0.1 to 4.0% by weight, in particular 0.1 to 0.5% by weight, based on the total weight of treatment composition of the invention with which the safener is used, or of which the safener forms a part.

Treatment compositions of the invention may include one or more oi amounts. It is possible that the activity of the inventive compositions may be improved by using one or more oils, e.g., one or more vegetable oils. The term vegetable oils is to be understood as meaning oils from oil-plant species, such as soya oil, rapeseed oil, corn oil, sunflower oil, cottonseed oil, linseed oil, coconut oil, palm oil, safflower oil or castor oil, in particular soybean oil, castor oil, rapeseed oil, and their transesterification products, for example alkyl esters, such as rapeseed oil methyl ester or rapeseed oil ethyl ester.

The vegetable oils are preferably esters of C₁₀-C₂₂ -, preferably C₁₂-C₂₀-fatty acids. The C₁₀-C₂₂-fatty acid esters are, for example, esters of unsaturated or saturated C₁₀-C₂₂-fatty acids, in particular those with an even number of carbon atoms, for example erucic acid, lauric acid, palmitic acid and, in particular, C₁₈-fatty acids such as stearic acid, oleic acid, linoleic acid or linolenic acid. Specific examples of C₁₀-C₂₂-fatty acid esters are esters obtained by reacting glycerol or glycol with the C₁₀-C₂₂-fatty acids as they exist, for example, in oils from oil-plant species, or C₁-C₂₀-alkyl-C₁₀-C₂₂-fatty acid esters as can be obtained, for example, by transesterification of the abovementioned glycerol- or glycol-C₁₀-C₂₂-fatty acid esters with C₁-C₂₀₋alcohols (for example methanol, ethanol, propanol or butanol). Preferred C₁-C₂₀-alkyl-C₁₀-C₂₂-fatty acid esters are the methyl, ethyl, propyl, butyl, 2-ethylhexyl and dodecyl esters. Preferred glycol- and glycerol-C₁₀-C₂₂-fatty acid esters are the uniform or mixed glycol esters and glycerol esters of C₁₀-C₂₂-fatty acids, in particular of those fatty acids which have an even number of carbon atoms, for example erucic acid, lauric acid, palmitic acid and, in particular, C₁₈-fatty acids such as stearic acid, oleic acid, linolic acid or linolenic acid.

The application rates for one or more oils, when in a treatment composition of the invention, may vary widely but in general are advantageously from about 0.001 to about 50%by weight, preferably 0.01 - 40% by weight, based on the total weight of the composition of which one or more such oils form a part.

Treatment compositions of the invention may include one or more non-aqueous solvents in effective amounts. Representative solvents include: aromatic hydrocarbons, preferably the fractions containing 8 to 12 carbon atoms such as mixtures of alkylbenzenes, typically xylene mixtures or alkylated naphthalenes; aliphatic and cycloaliphatic hydrocarbons such as paraffins, cyclohexane or tetrahydronap alcohols such as ethanol, propanol or butanol; glycols and their ethers and esters such as propylene glycol or dipropylene glycol ether; ketones such as cyclohexanone, isophorone or diacetone alcohol; strongly polar solvents such as N-methyl-2-pyrrolidone, dimethyl sulfoxide, and in some cases also silicone oils. While such non-aqueous solvents may be omitted, when present they may be included in any effective amounts. Representative amounts are from about 0.001 to about 95% by weight, preferably from about 5% to about 90% by weight, based on the total weight of a treatment composition within which the non-aqueous solvent is present, or of which the non-aqueous solvent forms a part.

The treatment compositions of the invention may include solid carriers in effective amounts. Non-limiting examples of suitable carriers include materials known to the relevant art and are solid carriers typically used for dusts and dispersible powders are usually natural mineral fillers such as calcite, talcum, kaolin, montmorillonite or attapulgite. To improve the physical properties it is also possible to add highly dispersed silicic acid or highly dispersed absorbent polymers. Suitable granulated adsorptive carriers are porous types, including pumice, broken brick, sepiolite or bentonite; and suitable nonsorbent carriers are materials such as calcite or sand. In addition, innumerable pregranulated materials of inorganic or organic origin may be used, especially dolomite or pulverised plant residues. When present, such solid carriers may be included in a treatment composition any effective amounts. Representative amounts are from about 0.001 to about 95% by weight, preferably from about 5 to about 90% by weight, based on the total weight of the sulfonylurea based herbicide treatment preparation with which the solid carriers is present, or of which the solid carriers forms a part.

In certain product formats of the treatment composition, a major amount of water may be added to the forgoing constituents present in a treatment composition such as in a concentrated form, or pre-mix form of a treatment composition in order to form a tank mix or working solution or dispersion of the said forgoing constituents which in such a form is particularly adapted to be delivered by spraying. Water may be used as a carrier and/or as a solvent for one or more of the constituents present in a treatment composition, or may be both a solvent and carrier.

It is to understood that a treatment composition within the scope of this invention can exist not only as either phosmet without any further constituents, or at least one benzoylurea based chitin inhibiting compound without any further constituents, or a mixture consisting solely of phosmet and at least one benzoylurea based chitin inhibiting compound without further constituents, but usually product forms of treatment compositions may further include one or more further adjuncts as described herein, as well as further agrochemically active constituents, additives and/or customary formulation auxiliaries not described herein but known to the skilled formulator. Any such further adjuncts and/or further agrochemically active constituents, additives and/or customary formulation auxiliaries may be added to either the phosmet and/or at least one benzoylurea based chitin inhibiting compound prior at any time prior to the application of either the phosment or the at least one benzoylurea based chitin inhibiting compound, or both, to a fruit crop or fruit tree. For example, such a treatment composition may be formed by combining at least one of phosment or at least one benzoylurea based chitin inhibiting compound, but preferably both, with a suitable carrier, e.g, water, optionally with one or more adjuncts with or without one or more further agrochemically active constituents, additives and/or customary formulation auxiliaries in order to form a treatment composition therefrom. Any treatment composition may be applied in the customary manner. Any treatment composition of the invention can be formulated in various ways, depending on the prevailing biological and/or chemical-physical parameters. The following are examples of general possibilities for formulations: wettable powders (WP), water-soluble concentrates, emulsifiable concentrates (EC), aqueous solutions (SL), emulsions (EW) such as oil-in-water and water-in-oil emulsions, sprayable solutions or emulsions, suspension concentrates (SC), oil- or water-based dispersions, suspoemulsions, dusts (DP), seed-dressing materials, granules for soil application or for broadcasting, or water-dispersible granules (WG), ULV formulations, microcapsules or waxes.

Wettable powders (sprayable powders) are products which are uniformly dispersible in water and which, in addition to at least the phosmet or the at least one benzoylurea based chitin inhibiting compound but preferably both, frequently also comprise ionic or nonionic surfactants (wetters, dispersants), for example polyoxethylated alkylphenols, polyethoxylated fatty alcohols or fatty amines alkanesulfonates or alkylbenzenesulfonates, sodium lignosulfonate, sodium 2,2'-dinaphthylmethane-6,6'-disulfonate, sodium dibutyinaphthalenesulfonate or else sodium oleoylmethyltauride, in addition to a diluent or inert material.

Emulsifiable concentrates of treatment compositions of the invention may also be formed using conventional techniques, and used according to treatment methods of the invention. For example, at least one of phosmet and novaluran are dissolved in an organic solvent, for example butanol, cyclohexanone, dimethylformamide, xylene or else higher-boiling aromatics or hydrocarbons with addition of one or more ionic or nonionic surfactants (emulsifiers) to form an emulsifiable concentrate. Non-limiting examples of emulsifiers which may be used are: calcium salts of alkylarylsulfonic acids, such as calcium dodecylbenzene sulfonate, or nonionic emulsifiers such as fatty acid polyglycol esters, alkylaryl polyglycol ethers, fatty alcohol polyglycol ethers, propylene oxide/ethylene oxide condensates, alkyl polyethers, sorbitan fatty acid esters, polyoxyethylene sorbitan fatty acid esters or polyoxethylene sorbitol esters. The emulsifiable concentrate can be later diluted or dispersed prior to use in a suitable carrier, and used as a treatment composition.

Typically, dusts are obtained by grinding the sulfonylurea based herbicide with finely divided solid materials, for example talc, natural clays such as kaolin, bentonite and pyrophyllite, or diatomaceous earth.

Suspension concentrates (SC) can be water- or oil-based. They can be prepared, for example, by wet grinding by means of commercially available bead mills and, if appropriate, addition of further surfactants as they have already been mentioned for example above in the case of the other formulation types.

Emulsions, for example oil-in-water emulsions (EW), can be prepared for example by means of stirrers, colloid mills and/or static mixers using aqueous organic solvents and, if appropriate, further surfactants as have already been mentioned for example above in the case of the other formulation types.

Microemulsions may also be used as a product form for the inventive compositions, which may be produced according to convention methods know to the art.

Similarly microencapsulated product forms may also be used as a pro for the inventive compositions, which may be produced according to convention methods know to the art.

Granules can be prepared either by spraying one or both of the phosmet or at least one benzoylurea based chitin inhibiting compound and any further optional constituents (where appropriate) onto adsorptive, granulated inert material or by applying one or both of the phosmet or at least one benzoylurea based chitin inhibiting compound and any further optional constituents (where appropriate) to the surface of carriers such as sand, kaolites or granulated inert material with the aid of binders, for example polyvinyl alcohol, sodium polyacrylate or else mineral oils. Granulation may occur in the manner conventionally used for the production of fertilizer granules, if desired in a mixture with fertilizers. As a rule, water-dispersible granules are prepared by conventional processes such as spray drying, fluidized-bed granulation, disk granulation, mixing with high-speed mixers and extrusion without solid inert material, according to techniques known to the art.

Treatment compositions may be provided in a variety of product forms. In one such form a concentrated composition containing one or both phosmet and at least one benzoylurea based chitin inhibiting compound, optionally with one or more further adjunct materials, are provided in a form wherein the concentrated composition is intended to be blended or dispersed in a further fluid carrier such as water or other largely aqueous liquid, to which fluid carrier may be separately added or within which is already present one or more adjunct materials. Such is a convenient method to form a "tank mix" or other form of a treatment composition which may be ready-to-use and suitable for application onto a fruit crop and/or fruit tree.

In a still further product form, the treatment composition may also be provided in a powdered or solid form, e.g., a comminuted solid which can be dispersed into a fluid carrier or medium, in a concentrated form, which may be a solid, liquid, or a gel which is intended to be further dissolved or dispersed in a carrier medium, such as a liquid which may be pressurized or non-pressurized, e.g., water. Such a form of a treatment composition is advantageously and conveniently provided as a dispersible or dilutable concentrate composition which is then used in a "tank mix" which may optionally include further adjunct materials.

In a further product form, treatment compositions of the invention are provided as a ready-to-use product which requires no further dilution but can be directly applied to plants, or crops, viz., as a ready to use composition.

The treatment compositions of the invention may also be provided in any suitable or conventional packaging means. For example, conventional containers such as bottles, or sachets containing a solid, liquid or fluid composition enclosed within a water-soluble film may be conveniently provided particularly when the former are provided in premeasured unit dosage forms. The latter are particularly useful in avoiding the need for measuring or packaging and provides a convenient means whereby specific doses that the treatment compositions can be provided.

In a second aspect the present invention provides improved treatment regimens for the control of undesired insect pests prone to infest crops, particularly fruit crops, which regimens comprise the use of and application of the improved treatment compositions according to the first aspect of the invention. Broadly stated, in the second aspect of the invention, pesticidally effective amounts of both phosmet and at least one benzoylurea based chitin inhibiting compound are applied so to be present upon a fruit crop and/or fruit tree in order to provide particularly effective control of undesired insect pests thereon, in one or more stages of growth, e.g, eggs, larval or adult.

Nonlimiting examples of undesired insect pests which may be controlled by the inventive composition include one or more of: fireworm, gypsy moth, fruitworm, flea beetle, spanworm, leafroller, maggot, Colorado potato beetle, corn borer, budmouth, leafminer, fruitmoth, twig borer and weevil, in methods for their control in one or more stages of their growth, e.g., eggs, larval stage or adult, utilizing the inventive composition. In certain particularly preferred embodiments, there are provided methods for the control of Codling moth in one or more stages of its growth, e.g., eggs, larval stage or adult, utilizing the inventive compositions described herein.

The treatment compositions of the invention may be used in otherwise conventional application regimens or treatment processes used for the application of pesticides on crops, particularly fruit crops, e.g. fruit trees. By way of nonlimiting example, crops which may be treated using the inventive compositions include one or more of: blueberry, cranberry, stone fruit crops, pome fruit, potato, sweet potato, peas, nuts, including ground nuts as well as tree nuts, grapes and even alfalfa.

Non-limiting examples of equipment which may be used in conjunction with the treatment compositions of the invention include: airblast sprayers, fan driven sprayer, high velocity fan, pressurized spray heads, hand gun sprayers, sprinklers as well as other equipment known to be useful in application of treatment compositions to fruit crop and/or fruit trees.

The treatment compositions according to the invention as well as the methods according to the invention may be practiced upon virtually any plans or plant parts which may become or is susceptible to infested with, or is already undesirably infested with one or more insect pests, particularly the Codling moth. In preferred embodiments, the compositions of the invention are use to control the incidence of Codling moth on or among a fruit crop and/or fruit tree grown for or bearing a fruit crop.

Examples of fruit trees and/or fruit crops which are our advantageously treated with the treatment compositions taught herein include, but are not limited to one or more of the following: pome fruits, e.g., pears, apples, stone fruit, as well as nuts such as walnuts including English walnuts, stone fruit, crabapples, rosacea family fruits and flowers. While not listed here, further plants and crops which are to be understood to include both fruit crops as well as ornamental plants may also benefit from the inventive compositions.

As noted previously, the inventive compositions and inventive methods have been observed in the control of Codling moth (*Cydia pomonella Linnaeus*), and the incidence of damage to fruit crops caused thereby. However it is to be understood that the inventive compositions and methods may also be similarly effective in the control of other undesired fruit worms in the family *Tortricidae,* including but not limited to: grape berry moth (*Endopiza viteana Clemens*), and oriental fruit moth (*Grapholita molesta Busck*). Also as noted previously the inventive compositions and improved treatment regimens may also be used to control other undesired insect pests.

Certain preferred examples of treatment compositions, as well as cert examples of methods for controlling the presence of undesired pests in fruit, and fruit bearing trees are disclosed in the following examples.

### Example 1: Study of Codling Moth Damage in Pome Fruit Crops treated with Phosmet and Triflumuron

Comparative studies of the efficacy of treatment compositions according to the invention which contained both phosmet and triflumuron, as compared to comparative compositions which included only triflumuron were undertaken. Both during and after the conclusion of the treatments with the various compositions, the incidence of fruit damage due to the incidence of Codling moth was evaluated and reported. The incidence of Codling moth damage on an untreated control sample of trees ("UTC") was also evaluated to provide baseline results for each set of trees at each of the test locations.

The location (US State) identity of the fruit crop, tree age, size of tree sample, treatment composition, wt/wt ratio of the active constituents in the treatment composition, application volume, mode of application, number of treatment applications, and application intervals, are indicated on Table 1, following. Treatment compositions and treatment protocols are identified by an example number beginning with the letter "E", while treatment compositions and treatment protocols according to comparative sample are identified by an example number beginning with the letter "C". The indicated treatment compositions were formed by dispersing the indicated constituents in a larger volume of water, to provide the indicated concentrations, which were thereafter applied.

| **Table 1** | | | | | | | | | | |
|---|---|---|---|---|---|---|---|---|---|---|
| | location | fruit crop | tree age (avg.) | sample size | treatment composition (per application) Phosmet (P) and/or Triflumuron(T) in lbs | wt/wt ratio of Phosmet: Triflumuron | application rate (volume) | application mode | no. of treatment applications | treatment application interval (days) |
| E1 | WA | apple (Red Delicious) | 21 years | 30 trees | (P) 1.75 lb and (T) 0.28 lb. | 6.25:1 | 100 gallons/acre | airblast spayer, 120 psi | 5 | 21 |
| E2 | " | " | " | " | (P) 1.75 lb and (T) 0.375 lb | 4.66:1 | " | " | " | " |
| E3 | " | " | " | " | (P) 1.75 lb and (T) 0.47 lb | 3.72:1 | " | " | " | " |
| C1 | " | " | " | " | (P) 2.1 lb | - | " | " | " | " |
| C2 | " | " | " | " | (P) 3.5 lb | - | " | " | " | " |
| E4 | OR | apple (Jonagold) | 20 years | 12 trees | (P) 1.75 lb and (T) 0.28 lb | 6.25:1 | 100 gallons/acre | airblast spayer, 120 psi | 6 | 21 |
| E5 | " | " | " | " | (P) 1.75 lb and (T) 0.375 lb | 4.66:1 | " | " | " | " |
| E6 | " | " | " | " | (P) 1.75 lb and (T) 0.47 lb | 3.72:1 | " | " | " | " |
| C3 | " | " | " | " | (P) 3.5 lb | -- | " | " | " | " |
| E7 | OR | pear (Packham) | 40 years | 1 tree | (P) 1.75 lb and (T) 0.375 lb | 4.66:1 | 102 gallons/acre | " | 5 | 21 |
| E8 | " | " | " | " | (P) 1.75 lb and (T) 0.47 lb | 3.72:1 | " | " | " | " |
| C4 | " | " | " | " | (P) 3.5 lb | - | " | " | " | " |
| E9 | WA | apple (Red Delicious) | 30 years | 2 trees | (P) 1.75 lb and (T) 0.28 lb | 6.25:1 | 200 gallons/acre | handgun sprayer, 80 psi | 5 | 21 |
| E10 | " | " | " | " | (P) 1.75 lb and (T) 0.375 lb | 4.66:1 | " | " | " | " |
| E11 | " | " | " | " | (P) 1.75 lb and (T) 0.47 lb | 3.72:1 | " | " | " | " |
| C5 | " | " | " | " | (P) 2.1 lb | - | " | " | " | " |
| C6 | " | " | " | " | (P) 3.5 lb | --- | " | " | " | " |

Each of the foregoing treatment protocols were initiated shortly after the fall of the fruit tree blossoms.

Evaluation of fruit damage caused by the incidence of Codling moth larvae was performed at two time intervals, a first evaluation was performed mid-season, approximately at the 1^{st} generation stage of Codling moth development, and a second evaluation was performed at harvest, approximately at the 1^{st} and 2^{nd} generation stage of Codling moth development. The reported results at harvest were indicative of cumulative injury to the examined fruit. At each evaluation, approximately 100 - 250 fruit were collected from trees treated according to each particular treatment protocol and were closely visually evaluated for Codling moth stings and complete larval entries, either of which would dictate damage to the fruit and require its culling. The reported results of the second evaluation, which is relevant as indicating the amount of marketable fruit, are indicated on the following Table 1A, for each of the treatment compositions and treatment protocols indicated on Table 1, as "% fruit damage". Further the % fruit damage for the untreated control sample of trees ("UTC") was also evaluated and reported on Table 1A.

| **Table 1A** | |
|---|---|
| | % fruit damage |
| UTC | 83.75 |
| E1 | 6.5 |
| E2 | 6.5 |
| E3 | 8.5 |
| C1 | 4.75 |
| C2 | 7 |
| --- | --- |
| UTC | 53 |
| E4 | 3.5 |
| E5 | 7 |
| E6 | 9 |
| C3 | 3 |
| --- | --- |
| UTC | 70.75 |
| E7 | 3 |
| E8 | 3.25 |
| C4 | 5.75 |
| --- | --- |
| UTC | 52.25 |
| E9 | 2 |
| E10 | 4 |
| E11 | 3.75 |
| C5 | 4.25 |
| C6 | 1.5 |

### Example 2: Study of Codling Moth Damage in Pome Fruit Crops treated with Phosmet and Novaluron

Comparative studies of the efficacy of treatment compositions according to the invention which contained both phosmet and novaluron, as compared to comparative compositions which included only novaluron or only phosmet were undertaken. Both during and after the conclusion of the treatments with the various compositions, the incidence of fruit damage due to the incidence of Codling moth was evaluated and reported. The incidence of Codling moth damage on an untreated control sample of trees ("UTC") was also evaluated to provide baseline results for each set of trees at each of the test locations.

The location (US State) identity of the fruit crop, tree age, size of tree sample, treatment composition, application volume, mode of application, number of treatment applications, and application intervals, are indicated on Table 2, following. Treatment compositions and treatment protocols are identified by an example number beginning with the letter "E", while treatment compositions and treatment protocols according to comparative examples are identified by an example number preceded by the letter "C". The indicated treatment compositions were formed by dispersing the indicated constituents in a larger volume of water, to provide the indicated concentrations, which were thereafter applied.

| **Table 2** | | | | | | | | | | |
|---|---|---|---|---|---|---|---|---|---|---|
| | location | fruit crop | tree age (avg.) | sample size | treatment composition (per application) Phosmet (P) and/or Novaluron (N) in lbs | wt/wt ratio of Phosmet: Novaluron | application rate (volume) | application mode | no. of treatment applications | treatment application interval (days) |
| E12 | WA | apple (Red Delicious) | 45 years | 0.75 acre | (P) 1.75 lb and (N) 0.125 lb | 14:1 | 200 gallons/acre | airblast sprayer, 250 psi | 6 | 14 |
| C7 | " | " | " | " | (P) 1.75 lb | - | " | " | " | " |
| C8 | " | " | " | " | (P) 3.5 lb | --- | " | " | " | " |
| E13 | OR | apple (Newtown) | 39 years | single tree | (P) 2.1 lb and (N) 0.188 lb | 11.17:1 | 400 gallons/acre | handgun sprayer, 200 psi | 4 | 21 |
| C9 | " | " | " | " | (N) 0.188 lb | - | " | " | " | " |
| C10 | " | " | " | " | (N) 0.25 lb | - | " | " | " | " |
| E14 | WA | apple (Red Delicious) | 45 years | 0.75 acre | (P) 1.75 lb and (N) 0.162 lb | 10.8:1 | 200 gallons/acre | airblast sprayer, 250 psi | 5 | 21 |
| C11 | " | " | " | " | (P) 2.1 lb | - | " | " | " | " |
| C12 | " | " | " | " | (P) 3.5 lb | - | " | " | " | " |
| C13 | " | " | " | " | (N) 0.162 lb | - | " | " | " | " |
| C14 | " | " | " | " | (N) 0.258 lb | - | " | " | " | " |
| E15 | WA | apple (Red Delicious) | 21 years | 30 trees | (P) 1.05 lb and (N) 0.097 lb | 18:1 | 100 gallons/acre | airblast sprayer, 120 psi | 5 | 21 |
| E16 | " | " | " | " | (P) 1.75 lb and (N) 0.162 lb | 10.8:1 | " | " | " | " |
| C15 | " | " | " | " | (P) 2.1 lb | - | " | " | " | " |
| C16 | " | " | " | " | (P) 3.5 lb | - | " | " | " | " |

| **Table 2** | | | | | | | | | | |
|---|---|---|---|---|---|---|---|---|---|---|
| | location | fruit crop | tree age (avg.) | sample size | treatment composition (per application) Phosmet (P) and/or Novaluron (N) in lbs | wt/wt ratio of Phosmet: Novaluron | application rate (volume) | application mode | no. of treatment applications | treatment application interval (days) |
| E17 | OR | apple (Jonagold) | 20 years | 12 trees | (P) 1.75 lb and (N) 0.162 lb | 10.8:1 | 100 gallons/acre | airblast sprayer, 120 psi | 6 | 21 |
| C17 | " | " | " | " | (P) 3.5 lb | - | " | " | " | " |
| E18 | OR | pear (Packham) | 40 years | single tree | (P) 1.75 lb and (N) 0.162 | 10.8:1 | 102 gallons/acre | airblast sprayer | 5 | 21 |
| C18 | " | " | " | " | (P) 3.5 lb | - | " | " | " | " |
| E19 | WA | apple (Red Delicious) | 30 years | 2 trees | (P) 1.4 lb and (N) 0.129 lb | 10.85:1 | 200 gallons/acre | handgun sprayer, 200 psi | 5 | 21 |
| E20 | " | " | " | " | (P) 1.05 lb and (N) 0.019 lb | 55.2:1 | " | " | " | " |
| C19 | " | " | " | " | (P) 2.1 lb | - | " | " | " | " |
| C20 | " | " | " | " | (P) 3.5 lb | - | " | " | " | " |
| E21 | WA | apple (Red Delicious | 22 years | 40 trees | (P) 1.75 lb and (N) 0.156 lb | 11.2 | 100 gallons/acre | airblast sprayer, 120 psi | 4 to 6 | 14 and 21 |
| C21 | " | " | " | " | (P) 2.1 lb | - | " | " | " | " |
| C22 | " | " | " | " | (P) 3.5 lb | - | " | " | " | " |
| E22 | WA | apple (Red Delicious | 20 years | 2 trees | (P) 1.75 lb and (N) 0.156 lb | 11.2:1 | 200 gallons/acre | handgun sprayer, 80 psi | 4 to 6 | 14 and 21 |
| C23 | " | " | " | " | (P) 3.5 lb | - | " | " | " | " |

| **Table 2** | | | | | | | | | | |
|---|---|---|---|---|---|---|---|---|---|---|
| | location | fruit crop | tree age (avg.) | sample size | treatment composition (per application) Phosmet (P) and/or Novaluron (N) in lbs | wt/wt ratio of Phosmet: Novaluron | application rate (volume) | application mode | no. of treatment applications | treatment application interval (days) |
| E23 | OR | pear (Packham) | 40 years | single tree | (P) 1.75 lb and (N) 0.156 | 11.2:1 | 104 gallons/acre | airblast sprayer | 5 | 21 |
| E24 | " | " | " | " | (P) 2.1 lb and (N) 0.129 lb | 16.2:1 | " | " | " | " |
| C24 | " | " | " | " | (P) 3.5 lb | - | " | " | " | " |
| E25 | OR | pear (Bartlett) | 20 years | 3 trees | (P) 1.75 lb and (N) 0.156 lb | 11.2:1 | 100 gallons/acre | airblast sprayer, 100 psi | 4 to 5 | 21 and 28 |
| C25 | " | " | " | " | (P) 3.5 lb | - | " | " | " | " |
| E26 | WA | apple (Gala) | 12 years | 10x40 foot plot planted trees | (P) 1.75 lb and (N) 0.156 lb | 11.2:1 | 100 gallons/acre | airblast sprayer, 200 psi | 4 to 5 | 21 and 28 |
| C26 | " | " | " | " | (P) 3.5 lb | - | " | " | " | " |

Each of the foregoing treatment protocols were initiated shortly after the fall tree blossoms.

Evaluation of fruit damage caused by the incidence of Codling moth larvae was performed at two time intervals, a first evaluation was performed mid-season, approximately at the 1^{st} generation stage of Codling moth development, and a second evaluation was performed at harvest, approximately at the 1^{st} and 2^{nd} generation stage of Codling moth development. The reported results at harvest were indicative of cumulative injury to the examined fruit. At each evaluation, approximately 100 - 250 fruit were collected from trees treated according to each particular treatment protocol and were closely visually evaluated for Codling moth stings and complete larval entries, either of which would dictate damage to the fruit and require its culling. The reported results of the second evaluation, which is relevant as indicating the amount of marketable fruit, are indicated on the following Table 2A, for each of the treatment compositions and treatment protocols indicated on Table 2, as "% fruit damage". Further the % fruit damage for the untreated control sample of trees ("UTC") was also evaluated and reported on Table 2A.

| **Table 2A** | |
|---|---|
| | % fruit damage |
| UTC | 71.3 |
| E12 | 2.1 |
| C7 | 18 |
| C8 | 6.3 |
| --- | --- |
| UTC | Not tested |
| E13 | 10.5 |
| C9 | 26.5 |
| C10 | 20.5 |
| --- | --- |
| UTC | 95 |
| E14 | 14.3 |
| C11 | 27.4 |
| C12 | 27 |
| C13 | 50 |
| C14 | 35.4 |
| --- | --- |
| UTC | 83.75 |
| E15 | 3.5 |
| E16 | 5 |
| C15 | 4.75 |
| C16 | 7 |
| --- | --- |
| UTC | 53 |
| E17 | 2.5 |
| C17 | 3 |
| --- | --- |
| UTC | 70.75 |
| E18 | 4 |
| C18 | 5.75 |
| --- | --- |
| UTC | 52.25 |
| E19 | 1.25 |
| E20 | 1.5 |
| C19 | 4.25 |
| C20 | 1.5 |
| --- | --- |
| UTC | 89.5 |
| E21 | 89.5 |
| C21 | 10 |
| C22 | 3.5 |
| --- | --- |
| UTC | 64.8 |
| E22 | 3.3 |
| C23 | 2.3 |
| --- | --- |
| UTC | 55.75 |
| E23 | 0.77 |
| E24 | 0.5 |
| C24 | 10.5 |
| --- | --- |
| UTC | 21.8 |
| E25 | 3.3 |
| C25 | 0 |
| --- | --- |
| UTC | 73 |
| E26 | 22 |
| C26 | 26 |

As is evident from a review of the reported results, it is surprisingly observed that many treatment compositions which included reduced amounts of phosmet with novaluron were very effective as compared to comparative treatment compositions which included only phosmet. At least equally surprising was the generally observed trend that satisfactory or improved control of Codling moth was seen to occur in treatment compositions including both phosmet with novaluron; such indicates a synergistic effect. changes may be made and equivalents may be substituted for elements there departing from the scope of the invention. In addition, modifications may be made to adapt a particular situation or material to the teachings of the invention without departing from the essential scope thereof. Therefore, it is intended that the invention not be limited to the particular embodiments disclosed in the above detailed description, but that the invention will include all embodiments falling within the scope of the appended claims.

## Claims

1. Pesticidal compositions comprising synergistic mixtures of O, O-dimethyl S-phthalimidomethyl phosphorodithioate or suitable salt forms thereof, and one or more of (RS)-1-[3-chloro-4-(1,1,2-trifluoro-2-trifluoromethoxyethoxy)phenyl]-3-(2,6-difluorobenzoyl)urea (also interchangeably referred to as "novaluron") or suitable salt forms thereof, and 1-(2-chlorobenzoyl)-3-(4-trifluoromethoxyphenyl)urea (also interchangeably referred to as "triflumuron") or suitable salt forms thereof, for the control of undesired insect pests.

2. Pesticidal compositions according to claim 1, wherein the undesired insect pests are Codling moth in one or more stages of its growth.

3. Pesticidal compositions according to claim 1 or claim 2, wherein the O, O-dimethyl S-phthalimidomethyl phosphorodithioate or a salt form thereof, to the one or more of (RS)-1-[3-chloro-4-(1,1,2-trifluoro-2-trifluoromethoxyethoxy)phenyl]-3-(2,6-difluorobenzoyl)urea or a salt form thereof, and 1-(2-chlorobenzoyl)-3-(4-trifluoromethoxyphenyl)urea or a salt form thereof, are present in a respective weight ratio selected from 75:25; 77.5:22.5; 80:20; 82.5:17.5; 85:15; 87.5:12.5; 90:10; 92.5:7.5; 95:5; 97.5:2.5; 98:2 and 99:1.

4. A method for controlling undesired insect pests in crops, the method comprising the step of:
applying a pesticidal composition according to claim 1 to the crop, in an effective amount in order to control the insect pest.

5. The method for controlling the incidence of Codling moth in one or more stages of its growth in crops, the method comprising the step of:
applying a pesticidal composition according to claim 1 to the crop, in an effective amount in order to control the Codling moth.

## Patentansprüche

1. Pestizide Zusammensetzungen, umfassend synergistische Mischungen von O,O-Dimethyl-S-phthalimidomethylphosphorodithioat oder geeigneten Salzformen davon und einer oder mehr der Verbindungen (RS)-1-[3-Chlor-4-(1,1,2-trifluor-2-trifluormethoxyethoxy)phenyl]-3-(2,6-difluorben-zoyl)harnstoff (austauschbar auch "Novaluron" genannt) oder geeigneten Salzformen davon und 1-(2-Chlorbenzoyl)-3-(4-trifluormethoxyphenyl)harnstoff (austauschbar auch "Triflumuron" genannt) oder geeigneten Salzformen davon, für die Bekämpfung von unerwünschten Schadinsekten.

2. Pestizide Zusammensetzungen nach Anspruch 1, wobei es sich bei den unerwünschten Schadinsekten um den Apfelwickler in einem oder mehreren seiner Wachstumsstadien handelt.

3. Pestizide Zusammensetzungen nach Anspruch 1 oder Anspruch 2, wobei das O,O-Dimethyl-S-phthalimidomethylphosphorodithioat oder eine Salzform davon zu der einen oder den mehreren der Verbindungen (RS)-1-[3-Chlor-4-(1,1,2-trifluor-2-trifluormethoxyethoxy)phenyl]-3-(2,6-difluorbenzoyl)harnstoff oder einer Salzform davon und 1-(2-Chlorbenzoyl)-3-(4-trifluormethoxyphenyl)harnstoff oder einer Salzform davon in einem jeweiligen Gewichtsverhältnis, ausgewählt aus 75:25; 77,5:22,5; 80:20, 82,5:17,5; 85:15; 87,5:12,5; 90:10; 92,5:7,5; 95:5; 97,5:2,5; 98:2 und 99:1 vorliegt.

4. Verfahren zur Bekämpfung von unerwünschten Schadinsekten in Kulturen, wobei das Verfahren den folgenden Schritt umfasst:
Ausbringen einer pestiziden Zusammensetzung nach Anspruch 1 auf die Kultur in einer für die Bekämpfung des Schadinsekts wirksamen Menge.

5. Verfahren zur Bekämpfung des Auftretens des Apfelwicklers in einem oder mehreren seiner Wachstumsstadien in Kulturen, wobei das Verfahren den folgenden Schritt umfasst:
Ausbringen einer pestiziden Zusammensetzung nach Anspruch 1 auf die Kultur in einer für die Bekämpfung des Apfelwicklers wirksamen Menge.

## Revendications

1. Compositions pesticides comprenant des mélanges synergiques de S-phtalimidométhyl-phosphorodithioate de O,O-diméthyle ou des formes de sel adaptées de celui-ci, et l'un ou plusieurs de la (RS)-1-[3-chloro-4-(1,1,2-trifluoro-2- trifluorométhoxyéthoxy)phényl]-3-(2,6-difluorobenzoyl)urée (également appelée de façon interchangeable « novaluron ») ou des formes de sel adaptées de celle-ci, et la 1-(2-chlorobenzoyl)-3-(4-trifluorométhoxyphényl)urée (également appelée de façon interchangeable « triflumuron ») ou des formes de sel adaptées de celle-ci, pour lutter contre des insectes nuisibles.

2. Compositions pesticides selon la revendication 1, les insectes nuisibles étant le carpocapse de la pomme à un ou plusieurs stades de sa croissance.

3. Compositions pesticides selon la revendication 1 ou la revendication 2, dans lesquelles le S-phtalimidométhyl-phosphorodithioate de O,O-diméthyle ou une forme de sel de celui-ci, par rapport à l'un ou plusieurs de la (RS)-1-[3-chloro-4-(1,1,2-trifluoro-2- trifluorométhoxyéthoxy)phényl]-3-(2,6-difluorobenzoyl)urée ou une forme de sel de celle-ci, et la 1-(2-chlorobenzoyl)-3-(4-trifluorométhoxyphényl)urée ou une forme de sel de celle-ci, sont présents dans un rapport en poids respectif choisi parmi 75:25 ; 77,5:22,5 ; 80:20 ; 82, 5:17, 5 ; 85:15 ; 87, 5:12, 5 ; 90:10 ; 92, 5:7, 5 ; 95:5 ; 97,5:2,5 ; 98:2 et 99:1.

4. Procédé de lutte contre des insectes nuisibles dans des cultures, le procédé comprenant l'étape de :
application d'une composition pesticides selon la revendication 1 sur la culture, en une quantité efficace pour lutter contre l'insecte nuisible.

5. Procédé de contrôle de l'incidence du carpocapse de la pomme à un ou plusieurs stades de sa croissance dans des cultures, le procédé comprenant l'étape de :
application d'une composition pesticides selon la revendication 1 sur la culture, en une quantité efficace pour lutter contre le carpocapse de la pomme.
